# EUROPEAN PATENT APPLICATION

(11) **EP 3 110 117 A1**
(43) Date of publication of application: **28.12.2016**
(21) Application number: 14892374.1
(22) Date of filing: 01.08.2014
(51) Int. Cl.: H04M 3/533

(54) **VOICE MESSAGE NOTIFICATION METHOD AND DEVICE**

(30) Priority: 20.05.2014 CN 201410213711
(71) Applicant: ZTE Corporation, Shenzhen, Guangdong 518057 (CN)
(72) Inventor: WANG, Di, Shenzhen Guangdong 518057 (CN)
(74) Representative: Novagraaf Technologies
(86) International application number: PCT/CN2014/083593
(87) International publication number: WO 2015/176391

(57) **Abstract**

The disclosure discloses a method and device for notifying a voice message. After a voice message sent from a calling terminal is received, a state of a called terminal is acquired. Then, according to a preset list of a corresponding relation between called terminal states and voice message notification modes, a voice message notification mode corresponding to the state of the called terminal is selected to notify the called terminal to answer the voice message. A short message notification mode is not applicable to just any state of the called terminal. Thus, a voice message notification mode provided in the disclosure can be flexibly selected according to a state of a called terminal, notification modes are richer, and the satisfaction in user experience can be greatly improved.

## Description

### Technical Field

The disclosure relates to the communications field, and in particular to a method and device for notifying a voice message.

### Background

A voice mailbox serves as an intelligent call supplementary service applicable to an occasion where after identifying a call loss when a call is inaccessible to a called party, a core network reports the call loss to an intelligent network. Voice Message Service (VMS) is widely applied at home and abroad. However, in existing VMS, after a voice message of a calling party is received, the called party will be uniformly notified in a short message notification mode regardless of a state of the called party. A notification mode is single, and satisfaction in user experience is low.

### Summary

The embodiments of disclosure provide a method and device for notifying a voice message, which solve the problems of single voice message notification mode and low satisfaction in user experience in the related art.

In order to solve the technical problem, one embodiment of the disclosure provides a method for notifying a voice message notification, which may include that:
receiving a voice message sent from a calling terminal, and acquiring a state of a called terminal; and
selecting, according to a preset list of a corresponding relation between called terminal states and voice message notification modes, a voice message notification mode corresponding to the state of the called terminal to notify the called terminal to answer the voice message.

In an example embodiment, in the list of the corresponding relation between called terminal states and voice message notification modes, at least two different called terminal states respectively correspond to different voice message notification modes.

In an example embodiment, in the list of the corresponding relation between called terminal states and voice message notification modes, at least one called terminal state separately corresponds to at least two voice message notification modes.

In an example embodiment, in the list of the corresponding relation between called terminal states and voice message notification modes,
when the state of the called terminal is a calling state, the corresponding voice message notification mode is at least one of a Message Waiting Indicator (MWI) notification, a short message notification and a Visual Voice Mailbox (VVM) notification;
when the state of the called terminal is a ringing timeout state, the corresponding voice message notification mode is at least one of an MWI notification, a short message notification and a VVM notification;
when the state of the called terminal is switched from a power-off state to a power-on state, the corresponding voice message notification mode is a call-out notification; and
when the state of the called terminal is switched from an out-of-service state to an in-service state, the corresponding voice message notification mode is at least one of a short message notification, an MWI notification and a VVM notification.

In an example embodiment, acquiring the state of the called terminal includes:
acquiring a call forwarding reason of the voice message, when the call forwarding reason is BUSY, the state of the called terminal being a calling state, when the call forwarding reason is NO ANSWER, the state of the called terminal being a ringing timeout state, and when the call forwarding reason is USER INACCESSIBILITY, the state of the called terminal being detected via a detection message.

In an example embodiment, detecting the state of the called terminal via the detection message includes:
sending a detection message carrying an identifier for acquiring an intermediate receipt to a Short Message Service Center (SMSC);
receiving a first receipt response fed back by the SMSC, wherein the first receipt response contains a current state, which is a power-off state or an out-of-service state, of the called terminal; and
receiving a second receipt response sent from the SMSC when detecting that the current state of the called terminal changes, wherein the second receipt response contains the current state, which is a power-on state or an in-service state, of the called terminal.

In order to solve the problem, another embodiment of the disclosure also provides a device for notifying a voice message, which may include an information processing component and a notification component, wherein
the information processing component is configured to receive a voice message sent from a calling terminal, and acquire a state of a called terminal; and
the notification component is configured to select, according to a preset list of a corresponding relation between called terminal states and voice message notification modes, a voice message notification mode corresponding to the state of the called terminal to notify the called terminal to answer the voice message.

In an example embodiment, in the list of the corresponding relation between called terminal states and voice message notification modes, at least two different called terminal states respectively correspond to different voice message notification modes.

In an example embodiment, in the list of the corresponding relation between called terminal states and voice message notification modes, at least one called terminal state separately corresponds to at least two voice message notification modes.

In an example embodiment, in the list of the corresponding relation between called terminal states and voice message notification modes,
when the state of the called terminal is a calling state, the corresponding voice message notification mode is at least one of a Message Waiting Indicator (MWI) notification, a short message notification and a Visual Voice Mailbox (VVM) notification;
when the state of the called terminal is a ringing timeout state, the corresponding voice message notification mode is at least one of an MWI notification, a short message notification and a VVM notification;
when the state of the called terminal is switched from a power-off state to a power-on state, the corresponding voice message notification mode is a call-out notification; and
when the state of the called terminal is switched from an out-of-service state to an in-service state, the corresponding voice message notification mode is at least one of a short message notification, an MWI notification and a VVM notification.

In an example embodiment, acquiring, by the information processing component, the state of the called terminal includes:
acquiring, by the information processing component, a call forwarding reason of the voice message, when the call forwarding reason is BUSY, the state of the called terminal being a calling state, when the call forwarding reason is NO ANSWER, the state of the called terminal being a ringing timeout state, and when the call forwarding reason is USER INACCESSIBILITY, the state of the called terminal being detected via a detection message.

In an example embodiment, detecting, by the information processing component, the state of the called terminal via the detection message includes:
sending, by the information processing component, a detection message carrying an identifier for acquiring an intermediate receipt to a Short Message Service Center (SMSC);
receiving, by the information processing component, a first receipt response fed back by the SMSC, wherein the first receipt response contains a current state, which is a power-off state or an out-of-service state, of the called terminal; and
receiving, by the information processing component, a second receipt response sent from the SMSC when detecting that the current state of the called terminal changes, wherein the second receipt response contains the current state, which is a power-on state or an in-service state, of the called terminal.

The disclosure has the beneficial effects as follows.

The disclosure provides a voice message notification method and system. After a voice message sent from a calling terminal is received, a state of a called terminal is acquired. Then, according to a preset corresponding relation list of called terminal states and voice message notification modes, a voice message notification mode corresponding to the state of the called terminal is selected to notify the called terminal to answer the voice message. A short message notification mode is not applicable to just any state of the called terminal. Thus, a voice message notification mode provided in the disclosure can be flexibly selected according to a state of a called terminal, notification modes are richer, and the satisfaction in user experience can be greatly improved.

### Brief Description of the Drawings

Fig. 1 is a flowchart of a method for notifying a voice message according to a first embodiment of the disclosure;
Fig. 2 is a flowchart showing detection of a state of a called terminal according to a first embodiment of the disclosure;
Fig. 3 is a flowchart showing detection of a state of a called terminal via a VMS component according to a first embodiment of the disclosure; and
Fig. 4 is a structural schematic diagram of a device for notifying a voice message according to a second embodiment of the disclosure.

### Detailed Description

The disclosure will be further illustrated below by means of specific implementations in conjunction with the drawings.

### First embodiment:

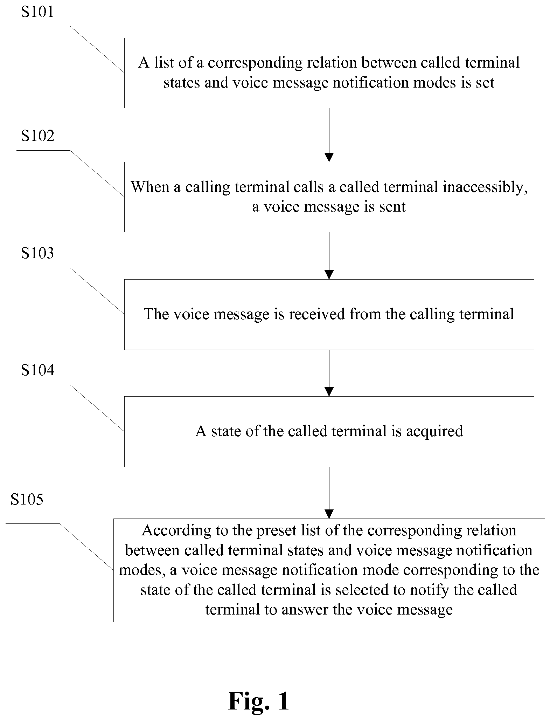

In the present embodiment, a calling terminal A calls a called terminal B, and when the called terminal B is inaccessible, the calling terminal A initiates VMS to leave a voice message. In this case, after receiving the voice message sent from the calling terminal A, the present embodiment does not simply send a short message notification to the called terminal B, but the present embodiment acquires the state of the called terminal B instead, and selects a corresponding communication mode to notify the called terminal B according to a specific state of the called terminal B. A specific process is shown in Fig. 1, and includes the steps as follows.
Step 101: A list of a corresponding relation between called terminal states and voice message notification modes is set.
Step 102: When a calling terminal calls a called terminal inaccessibly, a voice message is sent.
Step 103: The voice message is received from the calling terminal.
Step 104: A state of the called terminal is acquired.
Step 105: According to the preset list of the corresponding relation between called terminal states and voice message notification modes, a voice message notification mode corresponding to the state of the called terminal is selected to notify the called terminal to answer the voice message.

When the called terminal is inaccessible generally, the state of the called terminal includes four states namely a calling state, a ringing timeout state, a power-off state and an out-of-service state. Services can be directly and accurately identified in an occasion where the state is the calling state or the ringing timeout state. The services cannot be finely classified in an occasion where the state is the power-off state and the out-of-service state, and need to be determined by further detection. However, when the called terminal is in the power-off state or the out-of-service state, a notification will not be immediately sent to the called terminal. But, when the state is switched from the power-off state to a power-on state and switched from the out-of-service state to an in-service state, the called terminal is notified to receive the voice message.

In the present embodiment, notification modes include, but are not limited to, at least two of a short message notification, an MWI notification, a VVM notification and a call-out notification. For instance, only the short message notification and the call-out notification may be contained; when the state of the called terminal is switched from a power-off state to a power-on state, the called terminal is notified via the call-out notification; and when the state of the called terminal is a calling state or a ringing timeout state or is switched from an out-of-service state to an in-service state, the called terminal is notified via the short message notification. For another instance, notification modes may include a short message notification mode, an MWI notification mode, a VVM notification mode and a call-out notification mode; when the state of the called terminal is switched from a power-off state to a power-on state, the called terminal is notified in the call-out notification mode; when the state of the called terminal is a calling state, the called terminal is notified in the short message notification mode; when the state of the called terminal is a ringing timeout state, the called terminal is notified in the MWI notification mode; and when the state of the called terminal is switched from an out-of-service state to an in-service state, the called terminal is notified in the VVM notification mode. For another instance, when notification modes contain a short message notification mode, an MWI notification mode, a VVM notification mode and a call-out notification mode, when the state of the called terminal is switched from a power-off state to a power-on state, the called terminal is notified in the call-out notification mode, and may be notified in at least two of the call-out notification mode, the short message notification mode, the MWI notification mode and the VVM notification mode; when the state of the called terminal is a calling state, the called terminal is notified in the short message notification mode, and may be notified in at least two of the short message notification mode, the MWI notification mode and the VVM notification mode; when the state of the called terminal is a ringing timeout state, the called terminal is notified in the MWI notification mode, and may be notified in at least two of the short message notification mode, the MWI notification mode and the VVM notification mode; and when the state of the called terminal is switched from an out-of-service state to an in-service state, the called terminal is notified in the VVM notification mode, and may be notified in at least two of the short message notification mode, the MWI notification mode and the VVM notification mode.

Several examples of called terminal states and call modes only exemplarily illustrate a setting mode of the list of the corresponding relation between called terminal states and voice message notification modes in the present embodiment, and it will be appreciated that the above setting mode is not limited. According to the above examples, it can be seen that in the present embodiment, at least two different called terminal states respectively correspond to different voice message notification modes; or in the list of the corresponding relation between called terminal states and voice message notification modes, at least one called terminal state separately corresponds to at least two voice message notification modes; this setting can enrich notification modes of a voice message, improve a timeliness of answering the voice message by a user to a certain extent, and improve the satisfaction in user experience. For another instance, in the list of the corresponding relation between called terminal states and voice message notification modes in the present embodiment,
when the state of the called terminal is a calling state, the corresponding voice message notification mode is at least one of a VVM notification, a short message notification and an MWI notification;
when the state of the called terminal is a ringing timeout state, the corresponding voice message notification mode is at least one of a VVM notification, a short message notification and an MWI notification;
when the state of the called terminal is switched from a power-off state to a power-on state, the corresponding voice message notification mode is a call-out notification; and
when the state of the called terminal is switched from an out-of-service state to an in-service state, the corresponding voice message notification mode is at least one of a short message notification, a VVM notification and an MWI notification.

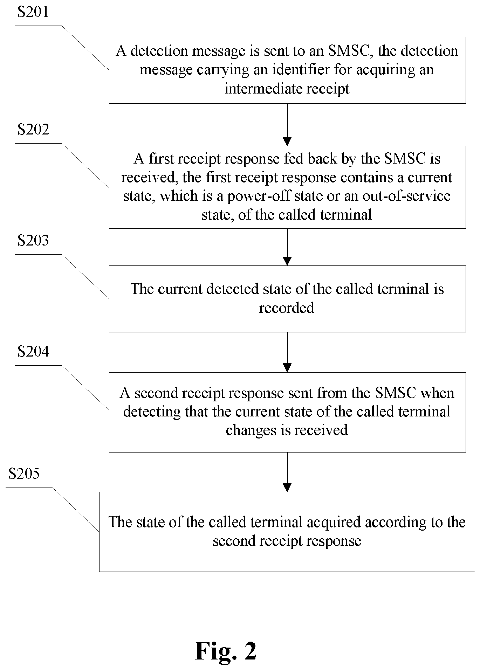

In the present embodiment, in Step 104 where the state of the called terminal is acquired, the process is as follows. A call forwarding reason of the voice message is acquired; when the call forwarding reason is BUSY, it is shown that the state of the called terminal is a calling state; when the call forwarding reason is NO ANSWER, it is shown that the state of the called terminal is a ringing timeout state; and when the call forwarding reason is USER INACCESSIBILITY, it is necessary to detect whether the state of the called terminal is a power-off state or an out-of-service state via a detection message. A specific detection mode is not limited. For instance, with reference to Fig. 2, the detection process may include that:
Step 201: a detection message is sent to an SMSC, the detection message carrying an identifier for acquiring an intermediate receipt;
Step 202: a first receipt response fed back by the SMSC is received, the first receipt response contains a current state, which is a power-off state or an out-of-service state, of the called terminal;
Step 203: the current detected state of the called terminal is recorded, wherein a specific mode may be: when the state is a power-off state, recording the state as the power-off state, and when the state is an out-of-service state, not making any records or recording the state as the out-of-service state;
Step 204: a second receipt response sent from the SMSC when detecting that the current state of the called terminal changes is received, wherein the second receipt response contains the current state, which is a power-on state or an in-service state, of the called terminal; and
Step 205: the state of the called terminal acquired according to the second receipt response is switched from the power-off state to the power-on state, or switched from the out-of-service state to the in-service state.

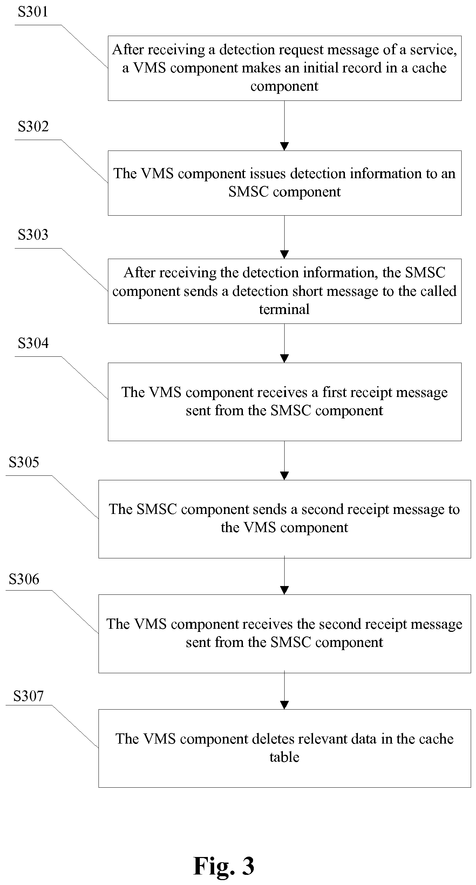

In the present embodiment, the detection process can be implemented by interaction between a VMS component and an SMSC component via a Short Message Peer to Peer (SMPP) message. The process will be illustrated below in conjunction with the Fig. 3 (but it will be appreciated that the implementation is not limited).
Step 301: After receiving a detection request message of a service, a VMS component makes an initial record in a cache component (for instance, a cache table), a user state field message-id being added to the initial record, the field being null in default.
Step 302: The VMS component issues detection information (which may specifically contain a short message of an identifier for acquiring an intermediate receipt) to an SMSC component. In this case, the VMS component needs to set bit4 of a needreport in an SMPP protocol to 1, which represents that it is necessary to acquire the intermediate receipt.
Step 303: After receiving the detection information, the SMSC component sends a detection short message to the called terminal, and generates a first receipt to be fed back to the VMS component according to the sending situation. In this case, state report error codes will be replied via the SMPP protocol,
   51: user power-off; and
   50: user out-of-service (call no-response).
Step 304: After receiving a first receipt message sent from the SMSC component, if judging that a receipt result is not sent, the VMS component determines a failure reason. If the failure reason is that the called terminal is power-off, a recorded user state field corresponding to the message-id is set as a power-off state (to be called out) in a cache table. If the failure reason is that the called terminal is out-of-service, any processing is not performed.
Step 305: When detecting that the state of the called terminal is switched from a power-off state to a power-on state or switched from an out-of-service state to an in-service state, the SMSC component sends a second receipt message to the VMS component.
Step 306: The VMS component receives the second receipt message, knows that the SMSC component has successfully sent the detection message to the called terminal, searches the cache table for the previously recorded message-id, and takes out a user state in the record. If the previously recorded user state is a power-off state, it is shown that the state of the called terminal is switched from the power-off state to the power-on state in this case, and a notification can be initiated in a set mode, for instance, a call-out mode. If the previously recorded user state is an out-of-service state or is not recorded, it is shown that the state of the called terminal is switched from the out-of-service state to the in-service state, and a notification can be initiated in a set mode, for instance, a short message notification mode.
Step 307: The VMS component deletes relevant data in the cache table.

In the present embodiment, in Step 305, when the VMS component waits for the SMSC component to feed back the second receipt message,
1, regardless of the state of the second receipt message, the SMSC component sends a receipt message to the VMS component;
2, when the second receipt message fed back by the SMSC component has not received yet if overtime configured on the VMS component expires, the SMSC component sends an overtime receipt to the VMS component, and the flow is ended; and
3, under other conditions, an existing one-time receipt processing mode is adopted to interact with the VMS component.

In the present embodiment, in Step 306, after the VMS component acquires the state of the called terminal via the detection message, the VMS component also executes the following process:
when the VMS component detects a power on behavior of a user, if a user state in the cache table recorded by the VMS component is not the power-off state (that is, the user state is not switched from the power-off state to the power-on state, and switched from the out-of-service state to the in-service state), a VMS service executes a short message notification; and an automatic service sends a short message notification message to an SMSC.

When the VMS component detects the power on behavior of the user, if the user state in the cache table recorded by the VMS component is the power-off state, the VMS component executes a call-out notification, the automatic service initiates call-out to the called terminal, and the subsequent call-out flow is invariable.

### Second embodiment:

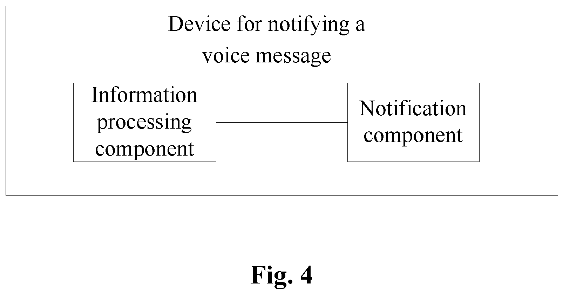

The present embodiment also provides a device for notifying a voice message. The device may be a VMS component specifically. With reference to Fig. 4, the device includes an information processing component and a notification component, wherein
the information processing component is configured to receive a voice message sent from a calling terminal, and acquire a state of a called terminal; and
the notification component is configured to select, according to a preset list of a corresponding relation between called terminal states and voice message notification modes, a voice message notification mode corresponding to the state of the called terminal to notify the called terminal to answer the voice message.

The list of the corresponding relation between called terminal states and voice message notification modes in the present embodiment may be set by a VMS component or other components. When the called terminal is inaccessible generally, the state of the called terminal includes four states namely a calling state, a ringing timeout state, a power-off state and an out-of-service state. Services can be directly and accurately identified in an occasion where the state is the calling state or the ringing timeout state. The services cannot be finely classified in an occasion where the state is the power-off state and the out-of-service state, and need to be determined by further detection. However, when the called terminal is in the power-off state or the out-of-service state, a notification will not be immediately sent to the called terminal. But, when the state is switched from the power-off state to a power-on state and switched from the out-of-service state to an in-service state, the called terminal is notified to receive the voice message. In the present embodiment, notification modes include, but are not limited to, at least two of a short message notification, an MWI notification, a VVM notification and a call-out notification. For instance, only the short message notification and the call-out notification may be contained; when the state of the called terminal is switched from a power-off state to a power-on state, the called terminal is notified via the call-out notification; and when the state of the called terminal is a calling state or a ringing timeout state or is switched from an out-of-service state to an in-service state, the called terminal is notified via the short message notification. For another instance, notification modes may include a short message notification mode, an MWI notification mode, a VVM notification mode and a call-out notification mode; when the state of the called terminal is switched from a power-off state to a power-on state, the called terminal is notified in the call-out notification mode; when the state of the called terminal is a calling state, the called terminal is notified in the short message notification mode; when the state of the called terminal is a ringing timeout state, the called terminal is notified in the MWI notification mode; and when the state of the called terminal is switched from an out-of-service state to an in-service state, the called terminal is notified in the VVM notification mode. For another instance, when notification modes contain a short message notification mode, an MWI notification mode, a VVM notification mode and a call-out notification mode, when the state of the called terminal is switched from a power-off state to a power-on state, the called terminal is notified in the call-out notification mode, and may be notified in at least two of the call-out notification mode, the short message notification mode, the MWI notification mode and the VVM notification mode; when the state of the called terminal is a calling state, the called terminal is notified in the short message notification mode, and may be notified in at least two of the short message notification mode, the MWI notification mode and the VVM notification mode; when the state of the called terminal is a ringing timeout state, the called terminal is notified in the MWI notification mode, and may be notified in at least two of the short message notification mode, the MWI notification mode and the VVM notification mode; and when the state of the called terminal is switched from an out-of-service state to an in-service state, the called terminal is notified in the VVM notification mode, and may be notified in at least two of the short message notification mode, the MWI notification mode and the VVM notification mode.

Several examples of called terminal states and call modes only exemplarily illustrate a setting mode of the list of the corresponding relation between called terminal states and voice message notification modes in the present embodiment, and it will be appreciated that the above setting mode is not limited. According to the above examples, it can be seen that in the present embodiment, at least two different called terminal states respectively correspond to different voice message notification modes; or in the list of the corresponding relation between called terminal states and voice message notification modes, at least one called terminal state separately corresponds to at least two voice message notification modes; this setting can enrich notification modes of a voice message, improve the timeliness of answering the voice message by a user to a certain extent, and improve the satisfaction in user experience. For another instance, in the corresponding relation list of called terminal states and voice message notification modes in the present embodiment,
when the state of the called terminal is a calling state, the corresponding voice message notification mode is at least one of a VVM notification, a short message notification and an MWI notification;
when the state of the called terminal is a ringing timeout state, the corresponding voice message notification mode is at least one of a VVM notification, a short message notification and an MWI notification;
when the state of the called terminal is switched from a power-off state to a power-on state, the corresponding voice message notification mode is a call-out notification; and
when the state of the called terminal is switched from an out-of-service state to an in-service state, the corresponding voice message notification mode is at least one of a short message notification, a VVM notification and an MWI notification.

In the present embodiment, the step that the information processing component acquires the state of the called terminal includes that: the information processing component acquires a call forwarding reason of the voice message; when the call forwarding reason is BUSY, the state of the called terminal is a calling state; when the call forwarding reason is NO ANSWER, the state of the called terminal is a ringing timeout state; and when the call forwarding reason is USER INACCESSIBILITY, the state of the called terminal is detected via a detection message. The process that the information processing component detects the state of the called terminal via the detection message is as follows.

The information processing component sends a detection message to an SMSC, the detection message carrying an identifier for acquiring an intermediate receipt;
the information processing component receives a first receipt response fed back by the SMSC, wherein the first receipt response contains a current state, which is a power-off state or an out-of-service state, of the called terminal;
the information processing component records the current state of the called terminal, detected currently, wherein a specific mode may be: when the state is a power-off state, recording the state as the power-off state, and when the state is an out-of-service state, not making any records or recording the state as the out-of-service state;
the information processing component receives a second receipt response sent from the SMSC when detecting that the current state of the called terminal changes, wherein the second receipt response contains the current state, which is a power-on state or an in-service state, of the called terminal; and
the information processing component switches the state of the called terminal acquired according to the second receipt response from the power-off state to the power-on state, or switches the state from the out-of-service state to the in-service state.

In the present embodiment, when the device for notifying the voice message is a VMS component, the state of the called terminal can be acquired specifically by interaction between the VMS component and an SMSC component via an SMPP message. The specific process is as follows.

After receiving a detection request message of a service, the VMS component makes an initial record in a cache component (for instance, a cache table), a user state field message-id being added to the initial record, the field being null in default.

The VMS component sends detection information (which may specifically contain a short message of an identifier for acquiring an intermediate receipt) to the SMSC component. In this case, the VMS component needs to set bit4 of a needreport in an SMPP protocol to 1, which represents that it is necessary to acquire the intermediate receipt.

After receiving the detection information, the SMSC component sends a detection short message to the called terminal, and generates a first receipt to be fed back to the VMS component according to the sending situation. In this case, state report error codes will be replied via the SMPP protocol,
51: user power-off; and
50: user out-of-service (call no-response).

After receiving a first receipt message sent from the SMSC component, if judging that a receipt result is not sent, the VMS component determines a failure reason. If the failure reason is that the called terminal is power-off, a recorded user state field corresponding to the message-id is set as a power-off state (to be called out) in a cache table. If the failure reason is that the called terminal is out-of-service, any processing is not performed.

When detecting that the state of the called terminal is switched from a power-off state to a power-on state or switched from an out-of-service state to an in-service state, the SMSC component sends a second receipt message to the VMS component.

The VMS component receives the second receipt message, knows that the SMSC component has successfully sent the detection message to the called terminal, searches the cache table for the previously recorded message-id, and takes out a user state in the record. If the previously recorded user state is a power-off state, it is shown that the state of the called terminal is switched from the power-off state to the power-on state in this case, and a notification can be initiated in a set mode, for instance, a call-out mode. If the previously recorded user state is an out-of-service state or is not recorded, it is shown that the state of the called terminal is switched from the out-of-service state to the in-service state, and a notification can be initiated in a set mode, for instance, a short message notification mode.

The VMS component deletes relevant data in the cache table.

In the present embodiment, when the VMS component waits for the SMSC component to feed back the second receipt message,
1, regardless of the state of the second receipt message, the SMSC component sends a receipt message to the VMS component;
2, when the second receipt message fed back by the SMSC component has not received yet if overtime configured on the VMS component expires, the SMSC component sends an overtime receipt to the VMS component, and the flow is ended; and
3, under other conditions, an existing one-time receipt processing mode is adopted to interact with the VMS component.

In the present embodiment, after the VMS component acquires the state of the called terminal via the detection message, the VMS component also executes the following process:
when the VMS component detects a power on behavior of a user, if a user state in the cache table recorded by the VMS component is not the power-off state (that is, the user state is not switched from the power-off state to the power-on state, and switched from the out-of-service state to the in-service state), a VMS service executes a short message notification; and an automatic service sends a short message notification message to an SMSC.

When the VMS component detects the power on behavior of the user, if the user state in the cache table recorded by the VMS component is the power-off state, the VMS component executes a call-out notification, the automatic service initiates call-out to the called terminal, and the subsequent call-out flow is invariable.

The above is further detailed illustrations made for the disclosure in conjunction with specific implementations, and it cannot be considered that the specific implementations of the disclosure are only limited to these illustrations. Those skilled in the art can also make several simple deductions or replacements without departing from the concept of the disclosure. These simple deductions or replacements shall fall within the protective scope of the disclosure.

### Industrial Applicability

The technical solutions provided by the embodiments of the disclosure can be applied to a voice message notification process. After a voice message sent from a calling terminal is received, a state of a called terminal is acquired. Then, according to a preset list of a corresponding relation between called terminal states and voice message notification modes, a voice message notification mode corresponding to the state of the called terminal is selected to notify the called terminal to answer the voice message. A short message notification mode is not applicable to just any state of the called terminal. Thus, a voice message notification mode provided in the disclosure can be flexibly selected according to a state of a called terminal, notification modes are richer, and the satisfaction in user experience can be greatly improved.

## Claims

1. A method for notifying a voice message, comprising:
receiving a voice message sent from a calling terminal, and acquiring a state of a called terminal; and
selecting, according to a preset list of a corresponding relation between called terminal states and voice message notification modes, a voice message notification mode corresponding to the state of the called terminal to notify the called terminal to answer the voice message.

2. The method as claimed in claim 1, wherein in the list of the corresponding relation between called terminal states and voice message notification modes, at least two different called terminal states respectively correspond to different voice message notification modes.

3. The method as claimed in claim 1, wherein in the list of the corresponding relation between called terminal states and voice message notification modes, at least one called terminal state separately corresponds to at least two voice message notification modes.

4. The method as claimed in claim 2, wherein in the list of the corresponding relation between called terminal states and voice message notification modes,
when the state of the called terminal is a calling state, the corresponding voice message notification mode is at least one of a Message Waiting Indicator (MWI) notification, a short message notification and a Visual Voice Mailbox (VVM) notification;
when the state of the called terminal is a ringing timeout state, the corresponding voice message notification mode is at least one of an MWI notification, a short message notification and a VVM notification;
when the state of the called terminal is switched from a power-off state to a power-on state, the corresponding voice message notification mode is a call-out notification; and
when the state of the called terminal is switched from an out-of-service state to an in-service state, the corresponding voice message notification mode is at least one of a short message notification, an MWI notification and a VVM notification.

5. The method as claimed in any one of claims 1 to 4, wherein acquiring the state of the called terminal comprises:
acquiring a call forwarding reason of the voice message, when the call forwarding reason is BUSY, the state of the called terminal being a calling state, when the call forwarding reason is NO ANSWER, the state of the called terminal being a ringing timeout state, and when the call forwarding reason is USER INACCESSIBILITY, the state of the called terminal being detected via a detection message.

6. The method as claimed in claim 5, wherein detecting the state of the called terminal via the detection message comprises:
sending a detection message carrying an identifier for acquiring an intermediate receipt to a Short Message Service Center (SMSC);
receiving a first receipt response fed back by the SMSC, wherein the first receipt response contains a current state, which is a power-off state or an out-of-service state, of the called terminal; and
receiving a second receipt response sent from the SMSC when detecting that the current state of the called terminal changes, wherein the second receipt response contains the current state, which is a power-on state or an in-service state, of the called terminal.

7. A device for notifying a voice message, comprising an information processing component and a notification component, wherein
the information processing component is configured to receive a voice message sent from a calling terminal, and acquire a state of a called terminal; and
the notification component is configured to select, according to a preset list of a corresponding relation between called terminal states and voice message notification modes, a voice message notification mode corresponding to the state of the called terminal to notify the called terminal to answer the voice message.

8. The device as claimed in claim 7, wherein in the list of the corresponding relation between called terminal states and voice message notification modes, at least two different called terminal states respectively correspond to different voice message notification modes.

9. The device as claimed in claim 7, wherein in the list of the corresponding relation between called terminal states and voice message notification modes, at least one called terminal state separately corresponds to at least two voice message notification modes.

10. The device as claimed in claim 8, wherein in the list of the corresponding relation between called terminal states and voice message notification modes,
when the state of the called terminal is a calling state, the corresponding voice message notification mode is at least one of a Message Waiting Indicator (MWI) notification, a short message notification and a Visual Voice Mailbox (VVM) notification;
when the state of the called terminal is a ringing timeout state, the corresponding voice message notification mode is at least one of an MWI notification, a short message notification and a VVM notification;
when the state of the called terminal is switched from a power-off state to a power-on state, the corresponding voice message notification mode is a call-out notification; and
when the state of the called terminal is switched from an out-of-service state to an in-service state, the corresponding voice message notification mode is at least one of a short message notification, an MWI notification and a VVM notification.

11. The device as claimed in any one of claims 7 to 10, wherein acquiring, by the information processing component, the state of the called terminal comprises:
acquiring, by the information processing component, a call forwarding reason of the voice message, when the call forwarding reason is BUSY, the state of the called terminal being a calling state, when the call forwarding reason is NO ANSWER, the state of the called terminal being a ringing timeout state, and when the call forwarding reason is USER INACCESSIBILITY, the state of the called terminal being detected via a detection message.

12. The device as claimed in claim 11, wherein detecting, by the information processing component, the state of the called terminal via the detection message comprises:
sending, by the information processing component, a detection message carrying an identifier for acquiring an intermediate receipt to a Short Message Service Center (SMSC);
receiving, by the information processing component, a first receipt response fed back by the SMSC, wherein the first receipt response contains a current state, which is a power-off state or an out-of-service state, of the called terminal; and
receiving, by the information processing component, a second receipt response sent from the SMSC when detecting that the current state of the called terminal changes, wherein the second receipt response contains the current state, which is a power-on state or an in-service state, of the called terminal.
